# EUROPÄISCHE PATENTANMELDUNG

(11) **EP 1 491 424 A2**
(43) Veröffentlichungstag der Anmeldung: **29.12.2004**
(21) Anmeldenummer: 04014878.5
(22) Anmeldetag: 24.06.2004
(51) Int. Cl.: B62B 7/14

(54) **Kinderwagen mit Sitz- oder Liegeaufsatz**

(30) Priorität: 24.06.2003 DE 10328389
(71) Anmelder: HAUCK GmbH & Co. KG, 96242 Sonnefeld (DE)
(72) Erfinder: Feyler, Beatrice, 96242 Sonnefeld (DE)
(74) Vertreter: Heinze, Ekkehard, Dipl.-Phys. Dr.

(57) **Zusammenfassung**

Kinderwagen mit einem Fahrgestell, welches sich in zwei parallelen senkrechten Ebenen erstreckende Gestellholme und einen Schieber umfaßt, und mit einem Aufsatz (11), der eine Sitzfläche und Rückenlehne oder eine Liegeschale aufweist, wobei an den Gestellholmen jeder Seite ein Stützlager (10) für den Aufsatz (11) ausgebildet ist. Die Stützlager (10) weisen jeweils wenigstens einen, insbesondere zwei im horizontalen Abstand voneinander angeordnete Zapfen (13) auf, die mit einem beim Aufsetzen des Aufsatzes (11) selbsttätig verriegelnden Rast- bzw. Verriegelungsmechanismus (snap-in-Mechanismus 12) zusammenwirken. Die Anordnung von Stützlager und snap-in-Mechanismus (12) kann auch umgekehrt erfolgen.

## Beschreibung

Die vorliegende Erfindung betrifft einen Kinderwagen mit einem Fahrgestell, welches sich in zwei parallelen senkrechten Ebenen erstreckende Gestellholme und einen Schieber umfaßt, und mit einem Aufsatz, der eine Sitzfläche und Rückenlehne oder eine Liegeschale aufweist, wobei an den Gestellholmen jeder Seite ein Stützlager für den Aufsatz ausgebildet ist.

Kinderwagen sind in der Regel durch ein zusammenklappbares Fahrgestell gekennzeichnet, welches aus in zwei parallelen senkrechten Ebenen aneinander angelenkten, zum Teil scherenartig angeordneten Gestellholmen und einem U-förmigen Schieber besteht, wobei entsprechende Gestellholme der beiden Ebenen jeweils ein Paar bilden. Des weiteren umfassen die bekannten Kinderwagen sehr häufig einen Aufsatz, der eine Sitzfläche und eine Rückenlehne oder eine Liegeschale definiert. Dieser Aufsatz ist zur anderweitigen Verwendung, z.B. zur Plazierung auf dem Rücksitz eines Kraftfahrzeuges sehr häufig vom Kinderwagengestell entfernbar. Eine bekannte Konstruktion dazu vermittelt z.B. die DE 296 02 814 U1 der Anmelderin. Diese Druckschrift bezieht sich jedoch primär auf Puppenwagen, bei denen Stabilitäts- und Funktions-Gesichtspunkte eine untergeordnete Rolle spielen.

Der vorliegenden Erfindung liegt die Aufgabe zugrunde, eine Konstruktion für einen Kinderwagen mit Aufsatz zu schaffen, bei der sich der Aufsatz ohne weiteres vom Kinderwagen abnehmen läßt, wobei andererseits die Verbindung mit dem Kinderwagen einfach und dauerhaft stabil sein soll.

Diese Aufgabe wird erfindungsgemäß durch die kennzeichnenden Merkmale des Anspruches 1 gelöst.

Ein wesentlicher Punkt der vorliegenden Erfindung besteht also darin, daß die Stützlager für den Aufsatz jeweils zwei im horizontalen Abstand voneinander angeordnete Zapfen aufweisen, die mit einem beim Aufsetzen des Aufsatzes selbsttätig verriegelnden Rast- bzw. "snap-in"-Mechanismus zusammenwirken. Die Anordnung von zwei im horizontalen Abstand voneinander angeordneten Zapfen schafft Kippstabilität im verriegelten Zustand. Darüber hinaus soll der Rastmechanismus selbsttätig verriegeln ähnlich wie die Verriegelung eines Skischuhs in einer sogenannten "step-in"-Skibindung. Zum Verriegeln des Aufsatzes am Kinderwagen ist also keine weitere Manipulation mehr erforderlich. Vorzugsweise ist die Konstruktion derart, daß auch bei einem etwas ungenauen Aufsetzen des Aufsatzes dieser sich selbsttätig in die richtige Lage verschiebt und verrastet.

Eine besonders wirkungsvolle Konstruktion ist dadurch gekennzeichnet, daß jeder Rastmechanismus, nämlich die Rastmechanismen zu jeder Seite des Aufsatzes jeweils zwei elastisch vorgespannte Verriegelungshaken mit schrägen Anlaufflächen für die Stützlagerzapfen aufweist, und zwar derart, daß die Stützlagerzapfen bei Anlage an den schrägen Anlaufflächen und Ausübung von Druck auf den Aufsatz die Verriegelungshaken gegen die Wirkung ihrer elastischen Vorspannung in eine Position drängen, in der die Stützlagerzapfen von den Verriegelungshaken hintergriffen werden. Die Verriegelungshaken schnappen dann in ihre Verriegelungsstellung zurück unter gleichzeitigem Hintergreifen der Stützlagerzapfen. Damit wird der Aufsatz auf dem Kinderwagen an vier Stützlagerzapfen gehalten, die an den Ecken eines in Draufsicht gedachten Rechtecks liegen.

Vorzugsweise sind die Verriegelungshaken jedes Rastmechanismus jeweils um eine Horizontalachse verschwenkbar gelagert, wobei die elastische Vorspannung bei dieser Ausführungsform vorteilhafterweise durch den Verriegelungshaken zugeordnete Torsionsfedern erfolgt.

Eine besonders einfache Konstruktion zeichnet sich dadurch aus, daß die Verriegelungshaken eines jeden Rastmechanismus getrieblich, insbesondere durch miteinander kämmende Zahnradabschnitte miteinander gekoppelt sind, so daß die elastische Vorspannung nur eines der beiden Verriegelungshaken eines jeden Paares von Verriegelungshaken genügt. Gegen die Wirkung dieser elastischen Vorspannung sollen die Verriegelungshaken auch in eine Stützlagerzapfen-Freigabestellung bewegbar sein, und zwar durch ein gesondertes Betätigungsorgan, z.B. Druckknopf.

Für die Stabilität und Funktionssicherheit der Rastverbindung zwischen Aufsatz und Kinderwagen bzw. Kinderwagengestell ist es besonders vorteilhaft, wenn das Stützlager jeder Seite auf einem gesonderten Stützholm des Fahrgestells befestigt ist. Vorzugsweise ist der Stützholm jeder Seite etwa bogen- oder trapezförmig nach unten gebogen. Das Gehäuse des Rastmechanismus weist entsprechend geformte und nach unten offene Aufnahmenuten auf, um eine formschlüssige Aufnahme des zugeordneten Stützholmes am Gehäuse des Rastmechanismus zu gewährleisten. Damit wird Stützkraft vom Rastmechanismus zusätzlich auf die gesamte Stützkonstruktion verteilt.

Nachstehend wird eine bevorzugte Ausführungsform einer Kinderwagen/Aufsatz-Rast- bzw. Verriegelungskonstruktion anhand der beigefügten Zeichnungen näher erläutert. Diese zeigen in:
- Fig. 1: die Zuordnung zwischen einem an einer Seite eines Kinderwagens angeordneten Stützlagers zu einem entsprechenden Rast- bzw. Verriegelungsmechanismus an derselben Seite eines Aufsatzes, in schematischer Seitenansicht unter Weglassung der Blendseiten; und
- Fig. 2: die vorgenannten Teile in entsprechender Seitenansicht, jedoch im verriegelten Zustand.

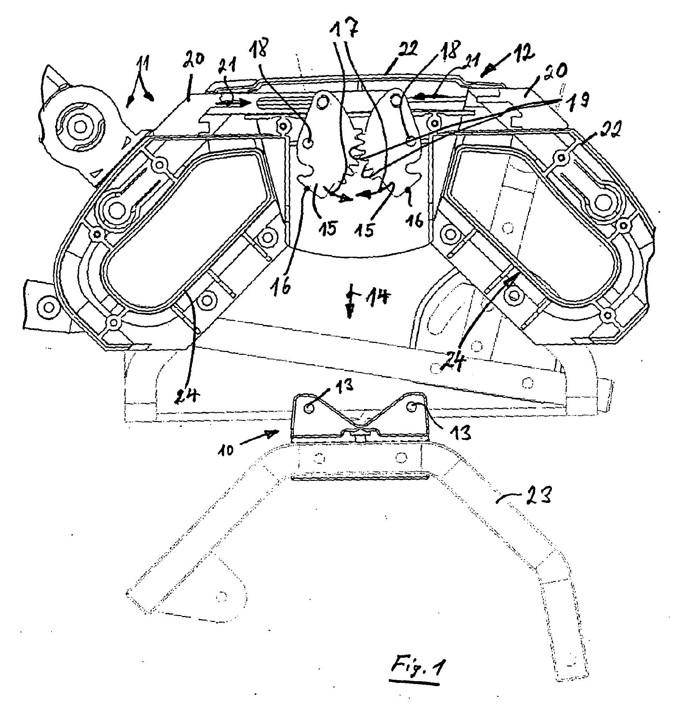

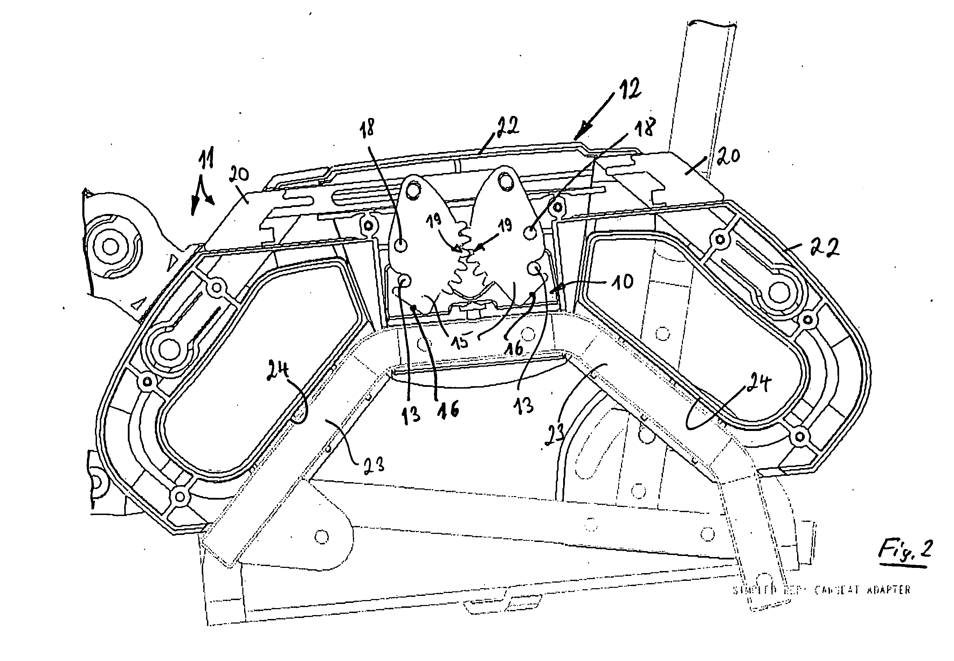

In den Figuren 1 und 2 sind nur die hier wesentlichen Teile eines Kinderwagens mit Aufsatz dargestellt, und zwar nur der Verriegelungsmechanismus zwischen Kinderwagen und Aufsatz. Dabei bedeutet die Bezugsziffer 10 ein Stützlager für einen Aufsatz 11, der in den Figuren 1 und 2 lediglich angedeutet ist. Das Stützlager 10 ist an jeder Seite des Kinderwagens vorgesehen; ebenso ist an jeder Seite des Aufsatzes 11 ein entsprechender Rast- bzw. Verriegelungsmechanismus 12 ausgebildet.

Die Stützlager 10 weisen jeweils zwei im horizontalen Abstand voneinander angeordnete Zapfen 13 auf, die mit dem Rast- bzw. Verriegelungsmechanismus 12 zusammenwirken, und zwar beim Aufsetzen des Aufsatzes 11 selbsttätig verriegelnd. Insofern stellt der Rast- bzw. Verriegelungsmechanismus einen sogenannten "snap-in"-Mechanismus dar. Das Aufsetzen des Aufsatzes 11 auf den Kinderwagen bzw. die zugeordneten Stützlager 10 erfolgt in Richtung des Pfeiles 14 in Fig. 1.

Jeder Rastmechanismus 12 weist zwei elastisch vorgespannte Verriegelungshaken auf, die hier scheibenförmig ausgebildet und jeweils mit schrägen Anlaufflächen 16 für die Stützlagerzapfen 10 versehen sind. Die Anlaufflächen 16 sind so ausgebildet und positioniert, daß beim Aufsetzen des Aufsatzes 11 auf das Stützlager 10 die Stützlagerzapfen 13 bei Anlage an den schrägen Anlaufflächen 16 und Ausübung von Druck in Richtung des Pfeiles 14 die Verriegelungshaken 15 gegen die Wirkung ihrer elastischen Vorspannung in eine Position drängen (Pfeile 17), in der die Stützlagerzapfen 13 von den Verriegelungshaken 15 hintergriffen werden (Fig. 2).

Wie die Figuren 1 und 2 sehr gut erkennen lassen, sind die Verriegelungshaken 15 jedes Rastmechanismus 12 um eine Horizontalachse 18 verschwenkbar gelagert.

Des weiteren sind die Verriegelungshaken 15 getrieblich, nämlich hier durch miteinander kämmende Zahnradabschnitte 19 miteinander gekoppelt, so daß die Verriegelungshaken 15 eines jeden Rast- bzw. Verriegelungsmechanismus 12 nicht gesondert elastisch vorgespannt werden müssen. Die elastische Vorspannung eines einzigen Verriegelungshakens 15 genügt.

Den beiden Verriegelungshaken 15 ist jeweils ein Betätigungsorgan in Form eines Druckknopfes 20 zugeordnet. Durch Ausübung von Druck auf einen der beiden Druckknöpfe 20 in Richtung der Pfeile 21, d.h. in das Innere des Gehäuses 22 des Rast- bzw. Verriegelungsmechanismus 12 hinein sollen die Verriegelungshaken 15 aus ihrer Rast- bzw. Verriegelungsstellung in eine Stützlagerzapfen-Freigabestellung bewegbar sein, d.h. in Richtung der Pfeile 17.

Von besonderer Bedeutung ist noch die Anordnung der Stützlager 10 jeweils auf einem gesonderten Stützholm 23 am hier nicht näher dargestellten Fahrgestell. Bei der Ausführungsform nach den Figuren 1 und 2 ist der Stützholm 23 trapezförmig nach unten gebogen. Das Gehäuse 22 des zugeordneten Rast- bzw. Verriegelungsmechanismus 12 weist an der Unterseite jeweils nach unten offene Aufnahmenuten 24 zur formschlüssigen Aufnahme des zugeordneten Stützholmes 23 auf, so wie dies in Fig. 2 erkennbar ist. Damit wird eine äußerst stabile, d.h. auch in Richtung nach vorne und hinten kippsichere Rastverbindung zwischen Aufsatz und Kinderwagen erhalten.

Wie bereits erwähnt, kann die elastische Vorspannung der Verriegelungshaken 15 bei verschwenkbarer Lagerung derselben durch diesen zugeordnete Torsionsfedern erfolgen. Genausogut ist jedoch auch die elastische Vorspannung eines der beiden Verriegelungshaken 15 durch eine Druck- oder Zugfeder möglich, gegen deren Wirkung dann auch die Druckknöpfe 20 betätigbar sind.

Schließlich sei noch darauf hingewiesen, daß das beschriebene Stützlager 10 am Aufsatz 11 und der zugeordnete Rast- bzw. Verriegelungsmechanismus am Kinderwagen ausgebildet sein können.

Stützlager und Rastmechanismus einschließlich dessen Gehäuse 22 können vorzugsweise aus Leichtmetall, insbesondere jedoch aus Kunststoff hergestellt sein. Die Stützlagerzapfen 13 bestehen jedoch vorzugsweise stets aus Metall.

Statt der schwenkgelagerten Verriegelungszapfen 15 können auch translatorisch gelagerte Verriegelungszapfen vorgesehen sein. Auch diese sind vorzugsweise durch ein Gestänge miteinander zwangsgekoppelt, so daß die elastische Vorspannung eines einzigen Verriegelungselements innerhalb des zugeordneten Rast- bzw. Verriegelungsmechanismus genügt.

Grundsätzlich ist es auch denkbar, daß das Stützlager 10 nur einen einzigen Stützlagerzapfen 13 aufweist. Diesem ist dann auch nur ein einziger Verriegelungshaken des Rast- bzw. Verriegelungsmechanismus zugeordnet. Die stabile Sicherung des Aufsatzes erfolgt dann primär durch das Zusammenspiel von Stützholm 23 und Aufnahmenut 24 an der Unterseite des Gehäuses des Rast- bzw. Verriegelungsmechanismus 12.

Sämtliche in den Anmeldungsunterlagen offenbarten Merkmale werden als erfindungswesentlich beansprucht, soweit sie einzeln oder in Kombination gegenüber dem Stand der Technik neu sind.

### Bezugszeichen

- 10: Stützlager
- 11: Aufsatz
- 12: Rast- bzw. Verriegelungsmechanismus
- 13: Zapfen
- 14: Pfeil
- 15: Verriegelungshaken
- 16: Anlauffläche
- 17: Pfeile
- 18: Horizontalachse
- 19: Zahnradabschnitt
- 20: Druckknopf
- 21: Pfeil
- 22: Gehäuse
- 23: Stützholm
- 24: Aufnahmenut

## Patentansprüche

1. Kinderwagen mit einem Fahrgestell, welches sich in zwei parallelen senkrechten Ebenen erstreckende Gestellholme und einen Schieber umfaßt, und mit einem Aufsatz (11), der eine Sitzfläche und Rückenlehne oder eine Liegeschale aufweist, wobei an den Gestellholmen jeder Seite ein Stützlager (10) für den Aufsatz (11) ausgebildet ist,
**dadurch gekennzeichnet, dass**
die Stützlager (10) jeweils wenigstens einen, insbesondere zwei im horizontalen Abstand voneinander angeordnete Zapfen (13) aufweisen, die mit einem beim Aufsetzen des Aufsatzes (11) selbsttätig verriegelnden Rast- bzw. Verriegelungsmechanismus (snap-in-Mechanismus 12) zusammenwirken.

2. Kinderwagen nach Anspruch 1,
**dadurch gekennzeichnet, dass**
jeder Rast- bzw. Verriegelungsmechanismus (12) wenigstens einen, insbesondere zwei elastisch vorgespannte Verriegelungshaken (15) mit schrägen Anlaufflächen (16) für die Stützlagerzapfen (10) aufweist derart, daß die Stützlagerzapfen (13) bei Anlage an den schrägen Anlaufflächen (16) und Ausübung von Druck die Verriegelungshaken (15) gegen die Wirkung ihrer elastischen Vorspannung in eine Position bringen (Pfeile 17), in der die Stützlagerzapfen (13) von den Verriegelungshaken (15) hintergreifbar sind.

3. Kinderwagen nach Anspruch 2,
**dadurch gekennzeichnet, dass**
die Verriegelungshaken (15) jedes Rast- bzw. Verriegelungsmechanismus (12) jeweils um eine Horizontalachse (18) verschwenkbar gelagert sind.

4. Kinderwagen nach Anspruch 2 oder 3,
**dadurch gekennzeichnet, dass**
die Verriegelungshaken (15) eines jeden Rast- bzw. Verriegelungsmechanismus (12) getrieblich, insbesondere durch miteinander kämmende Zahnradabschnitte (19) miteinander gekoppelt sind, so daß die elastische Vorspannung nur eines der beiden Verriegelungshaken (15) eines jeden Rast- bzw. Verriegelungsmechanismus (12) genügt.

5. Kinderwagen nach einem der Ansprüche 1-4,
**dadurch gekennzeichnet, dass**
die Verriegelungshaken (15) durch ein Betätigungsorgan, insbesondere Druckknopf (20) entgegen der Wirkung ihrer elastischen Vorspannung aus einer Rast- bzw. Verriegelungsstellung in eine Stützlagerzapfen-Freigabestellung bewegbar sind.

6. Kinderwagen nach einem der Ansprüche 1-5,
**dadurch gekennzeichnet, dass**
das Stützlager (10) an jeder Seite des Kinderwagens auf einem gesonderten Stützholm (23) befestigt ist.

7. Kinderwagen nach Anspruch 6,
**dadurch gekennzeichnet, dass**
der Stützholm (23) an jeder Seite des Kinderwagens etwa bogen- oder trapezförmig nach unten gebogen ist.

8. Kinderwagen nach Anspruch 6 oder 7,
**dadurch gekennzeichnet, dass**
der Rast- bzw. Verriegelungsmechanismus (12) jeweils innerhalb eines Gehäuses (22) angeordnet ist, das nach unten offene Aufnahmenuten (24) zur formschlüssigen Aufnahme des zugeordneten Stützholmes (23) aufweist.

9. Kinderwagen nach einem der Ansprüche 2-8,
**dadurch gekennzeichnet, dass**
die elastische Vorspannung der Verriegelungshaken (15) bei verschwenkbarer Lagerung derselben durch diesen zugeordnete Torsionsfedern erfolgt.

10. Kinderwagen nach einem der Ansprüche 1-9,
**dadurch gekennzeichnet, dass**
das Stützlager (10) am Aufsatz (11) und der Rast- bzw. Verriegelungsmechanismus (12) am Kinderwagen ausgebildet sind.
